# EUROPÄISCHE PATENTSCHRIFT

(11) **EP 2 574 821 B1**
(45) Veröffentlichungstag und Bekanntmachung des Hinweises auf die Patenterteilung: **30.10.2013**
(21) Anmeldenummer: 11183453.7
(22) Anmeldetag: 30.09.2011
(51) Int. Cl.: F16F 7/10, F16F 15/00

(54) **Aktiver Schwingungsdämpfer ohne direkte Beschleunigungserfassung**
Active oscillation attenuator without direct acceleration detection
Amortisseur d'oscillations actif sans détection d'accélération directe

(43) Veröffentlichungstag der Anmeldung: 03.04.2013
(73) Patentinhaber: Siemens Aktiengesellschaft, 80333 München (DE)
(72) Erfinder: Ladra, Uwe, 91056 Erlangen (DE); Schäfers, Elmar, 90763 Fürth (DE); Schür, Torsten, 91058 Erlangen (DE); Stoiber, Dietmar, 90763 Fürth (DE)

(56) Entgegenhaltungen:
- WO-A2-2008/107668
- US-A- 4 083 433
- US-A1- 2003 090 645

## Beschreibung

Die vorliegende Erfindung betrifft ein Betriebsverfahren für einen aktiven Schwingungsdämpfer, der eine relativ zu einer schwingungsfähigen mechanischen Struktur bewegbare Ausgleichsmasse aufweist,
- wobei von einer Steuereinrichtung des aktiven Schwingungsdämpfers anhand von der Steuereinrichtung zugeführten Messgrößen eine Absolutbewegung der mechanischen Struktur im Raum ermittelt wird,
- wobei von der Steuereinrichtung unter Berücksichtigung der ermittelten Absolutbewegung eine eine Schwingung der mechanischen Struktur dämpfende Kompensationsbewegung für die Ausgleichsmasse ermittelt wird,
- wobei ein auf der mechanischen Struktur angeordneter, auf die Ausgleichsmasse wirkender Ausgleichsantrieb von der Steuereinrichtung entsprechend der ermittelten Kompensationsbewegung angesteuert wird, so dass die Ausgleichsmasse mittels des Ausgleichsantriebs relativ zur mechanischen Struktur entsprechend der Kompensationsbewegung verfahren wird.

Die vorliegende Erfindung betrifft weiterhin ein Steuerprogramm, das Maschinencode umfasst, der von einer Steuereinrichtung für einen aktiven Schwingungsdämpfer unmittelbar abarbeitbar ist, wobei die Abarbeitung des Maschinencodes durch die Steuereinrichtung bewirkt, dass die Steuereinrichtung den aktiven Schwingungsdämpfer gemäß einem derartigen Betriebsverfahren betreibt.

Die vorliegende Erfindung betrifft weiterhin eine Steuereinrichtung für einen aktiven Schwingungsdämpfer, wobei die Steuereinrichtung derart ausgebildet oder programmiert ist, dass sie den aktiven Schwingungsdämpfer gemäß einem derartigen Betriebsverfahren betreibt.

Die vorliegende Erfindung betrifft weiterhin einen aktiven Schwingungsdämpfer,
- wobei der aktive Schwingungsdämpfer eine Ausgleichsmasse aufweist, die relativ zu einer schwingungsfähigen mechanischen Struktur bewegbar ist,
- wobei der aktive Schwingungsdämpfer einen auf der mechanischen Struktur angeordneten, auf die Ausgleichsmasse wirkenden Ausgleichsantrieb aufweist, mittels dessen die Ausgleichsmasse relativ zur mechanischen Struktur verfahrbar ist,
- wobei der aktive Schwingungsdämpfer Sensoren aufweist, mittels derer Istgrößen des Ausgleichsantriebs und/oder eine Lage der Ausgleichsmasse relativ zur mechanischen Struktur und/oder mindestens eine zeitliche Ableitung der Lage der Ausgleichsmasse relativ zur mechanischen Struktur erfassbar sind, und
- wobei der aktive Schwingungsdämpfer eine Steuereinrichtung aufweist, die mit den Sensoren zur Entgegennahme der von den Sensoren erfassten Größen datentechnisch verbunden ist.

Die oben genannten Gegenstände sind bekannt.

US2003/090645 zeigt einen aktiven Dämpfer, in welchem die Bewegung der zu dämpfenden Masse direkt erfasst und in eine Steuereinheit eingespeisst wird, wobei die letztere die Grösse des erfassten Vibrationssignals verwendet, um eine Ausgleichsmasse mit einem Antrieb anzusteuern, um somit die auftretenden Vibrationen zu kompensieren.

Um unerwünschte Schwingungen einer schwingungsfähigen mechanischen Struktur erfassen und kompensieren zu können, ist es erforderlich, die exakte Auslenkung der schwingungsfähigen mechanischen Struktur zu erfassen. Im Stand der Technik wird dies in der Regel dadurch realisiert, dass an der schwingungsfähigen mechanischen Struktur ein Beschleunigungssensor angeordnet ist, der die (ergänze: absolute) Beschleunigung der schwingungsfähigen mechanischen Struktur erfasst. Aufgrund der Beschleunigung wird sodann - in der Regel durch zweimaliges Integrieren - die schwingungsbedingte Auslenkung der schwingungsfähigen mechanischen Struktur ermittelt, so dass die Schwingung nachfolgend gedämpft werden kann.

Ein Beschleunigungssensor steht nicht in jedem Fall zur Verfügung und ist nicht in allen Fällen einsetzbar.

Die Aufgabe der vorliegenden Erfindung besteht daher darin, Möglichkeiten zu schaffen, mittels derer die Absolutbewegung der schwingungsfähigen mechanischen Struktur auch ohne das Vorhandensein eines Beschleunigungssensors ermittelt werden kann.

Die Aufgabe wird durch ein Betriebsverfahren mit den Merkmalen des Anspruchs 1 gelöst. Ausgestaltungen des erfindungsgemäßen Betriebsverfahrens sind Gegenstand der abhängigen Ansprüche 2 bis 5.

Erfindungsgemäß ist vorgesehen, ein Betriebsverfahren der eingangs genannten Art dadurch auszugestalten, dass die der Steuereinrichtung zugeführten Messgrößen Istgrößen des Ausgleichsantriebs und/oder eine Lage der Ausgleichsmasse relativ zur mechanischen Struktur und/oder mindestens eine zeitliche Ableitung der Lage der Ausgleichsmasse relativ zur mechanischen Struktur umfassen und die Absolutbewegung der mechanischen Struktur im Raum von der Steuereinrichtung anhand der genannten Größen ermittelt wird.

In einer bevorzugten Ausgestaltung ist vorgesehen, dass die Messgrößen zum einen den Iststrom oder das Istmoment des Ausgleichsantriebs und zum anderen die erste zeitliche Ableitung der Lage der Ausgleichsmasse relativ zur mechanischen Struktur umfassen. Durch diese Vorgehensweise gestaltet sich die Ermittlung der Absolutbewegung besonders einfach.

Es ist möglich, für die Ermittlung der Absolutbewegung zusätzlich weitere Messgrößen heranzuziehen. Vorzugsweise umfassen die Messgrößen jedoch ausschließlich die genannten Größen.

Vorzugsweise ist vorgesehen, dass die Ausgleichsmasse von der Steuereinrichtung durch entsprechendes Ansteuern des Ausgleichsantriebs zusätzlich zur Kompensationsbewegung mit einer Überlagerungsbewegung relativ zur mechanischen Struktur verfahren wird. Durch diese Vorgehensweise kann erreicht werden, dass nichtlineare Reibungseffekte, welche störend in die Messgrößenerfassung eingehen, minimiert werden. Vorzugsweise ist die Überlagerungsbewegung derart bestimmt, dass zu jedem Zeitpunkt die erste, die zweite und/oder die dritte zeitliche Ableitung der Überlagerungsbewegung von Null verschieden sind.

Die Überlagerungsbewegung ist in der Regel eine oszillierende Bewegung. Ihr Hub kann nach Bedarf bestimmt sein. Ihre Frequenz ist in der Regel relativ niedrig.

Wenn die schwingungsfähige mechanische Struktur betriebsmäßig nicht verfahren wird, sind die oben genannten Maßnahmen völlig ausreichend. Insbesondere kann in diesem Fall die Kompensationsbewegung direkt anhand der Absolutbewegung der schwingungsfähigen mechanischen Struktur ermittelt werden, also ohne weitere variable Größen berücksichtigen zu müssen. Alternativ ist es jedoch möglich, dass die mechanische Struktur mittels eines Strukturantriebs entsprechend einer Sollverfahrbewegung verfahren wird. In diesem Fall wird vorzugsweise die Sollverfahrbewegung von der Steuereinrichtung bei der Ermittlung der Kompensationsbewegung berücksichtigt.

Die Aufgabe wird weiterhin durch ein Steuerprogramm gemäß Anspruch 6 gelöst. Erfindungsgemäß bewirkt die Abarbeitung des Maschinencodes durch die Steuereinrichtung, dass die Steuereinrichtung den aktiven Schwingungsdämpfer gemäß einem erfindungsgemäßen Betriebsverfahren betreibt.

Die Aufgabe wird weiterhin durch eine Steuereinrichtung mit den Merkmalen des Anspruchs 7 gelöst. Erfindungsgemäß ist die Steuereinrichtung derart ausgebildet oder programmiert, dass sie den aktiven Schwingungsdämpfer gemäß einem erfindungsgemäßen Betriebsverfahren betreibt.

Die Aufgabe wird weiterhin durch einen aktiven Schwingungsdämpfer mit den Merkmalen des Anspruchs 8 gelöst. Erfindungsgemäß ist vorgesehen, einen aktiven Schwingungsdämpfer der eingangs genannten Art dadurch auszugestalten, dass die Steuereinrichtung erfindungsgemäß ausgebildet oder programmiert ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen
- FIG 1: schematisch eine schwingungsfähige mechanische Struktur und einen aktiven Schwingungsdämpfer,
- FIG 2: ein Ablaufdiagramm,
- FIG 3: ein Ansteuerschema und
- FIG 4: eine nähere Ausgestaltung von FIG 3.

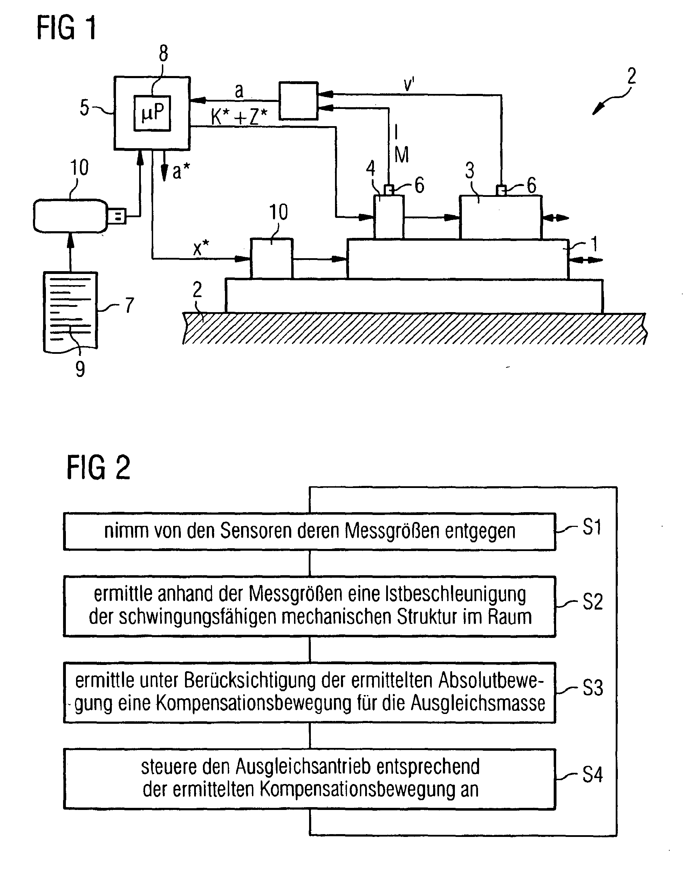

Gemäß FIG 1 sollen Schwingungen einer schwingungsfähigen mechanischen Struktur 1 gedämpft werden. Zu diesem Zweck ist ein aktiver Schwingungsdämpfer 2 vorhanden. Der aktive Schwingungsdämpfer 2 weist eine Ausgleichsmasse 3, einen Ausgleichsantrieb 4, eine Steuereinrichtung 5 und Sensoren 6 auf.

Die Ausgleichsmasse 3 ist relativ zur schwingungsfähigen mechanischen Struktur 1 bewegbar. Der Ausgleichsantrieb 4 ist auf der schwingungsfähigen mechanischen Struktur 1 angeordnet. Er wirkt auf die Ausgleichsmasse 3. Mittels des Ausgleichsantriebs 4 ist die Ausgleichsmasse 3 relativ zur schwingungsfähigen mechanischen Struktur 1 verfahrbar.

Mittels der Sensoren 6 sind Istgrößen I, M des Ausgleichsantriebs 4, eine Lage x' der Ausgleichsmasse 3 relativ zur schwingungsfähigen mechanischen Struktur 1 und/oder mindestens eine zeitliche Ableitung v' der Lage x' der Ausgleichsmasse 3 relativ zur schwingungsfähigen mechanischen Struktur 1 erfassbar. Insbesondere können mittels der Sensoren 6 einerseits der Iststrom I oder alternativ das Istmoment M des Ausgleichsantriebs 4 und andererseits die Geschwindigkeit v' der Ausgleichsmasse 3 relativ zur schwingungsfähigen mechanischen Struktur 1 erfassbar sein.

Die Steuereinrichtung 5 ist mit den Sensoren 6 zur Entgegennahme der von den Sensoren 6 erfassten Größen I, M, v' datentechnisch verbunden. Sie ist derart ausgebildet, dass sie den aktiven Schwingungsdämpfer 2 gemäß einem Betriebsverfahren betreibt, das nachfolgend näher erläutert wird.

Entsprechend der Darstellung von FIG 1 weist die Steuereinrichtung 5 intern in der Regel einen Mikroprozessor 8 auf. Die Steuereinrichtung 5 ist daher in der Regel als softwareprogrammierbare Steuereinrichtung ausgebildet, die ein Computerprogramm 7 abarbeitet. Das Computerprogramm 7 umfasst Maschinencode 9, der von der Steuereinrichtung 5 (genauer: dem Mikroprozessor 8 der Steuereinrichtung 5) unmittelbar abarbeitbar ist. Die Abarbeitung des Maschinencodes 9 bewirkt, dass die Steuereinrichtung 5 den aktiven Schwingungsdämpfer 2 entsprechend dem erfindungsgemäßen Betriebsverfahren betreibt. Das Computerprogramm 7 bewirkt also die entsprechende Ausbildung der Steuereinrichtung 5.

Das Computerprogramm 7 kann der Steuereinrichtung 5 auf beliebige Weise zugeführt werden. Beispielsweise kann das Computerprogramm 7 in maschinenlesbarer Form - insbesondere in elektronischer Form - auf einem Datenträger 10 gespeichert sein, und der Steuereinrichtung 5 über den Datenträger 10 zugeführt werden. Rein beispielhaft ist der Datenträger 10 gemäß FIG 1 als USB-Memory-Stick ausgebildet. Diese Ausgestaltung kann jedoch ohne Weiteres variiert werden.

Das erfindungsgemäße Betriebsverfahren wird nachfolgend in Verbindung mit FIG 2 näher erläutert.

Gemäß FIG 2 nimmt die Steuereinrichtung 1 in einem Schritt S1 von den Sensoren 6 deren Messgrößen M, I, v' entgegen, insbesondere das Istmoment M oder den Iststrom I des Ausgleichsantriebs 4 und die Istgeschwindigkeit v' der Ausgleichsmasse 3 relativ zur schwingungsfähigen mechanischen Struktur 1. Falls erforderlich, können weitere Größen entgegengenommen werden.

In einem Schritt S2 ermittelt die Steuereinrichtung 5 anhand der entgegengenommenen Messgrößen I, M, v' eine Istbeschleunigung a der schwingungsfähigen mechanischen Struktur 1 im Raum. Die Istbeschleunigung a ist charakteristisch für die Absolutbewegung der schwingungsfähigen mechanischen Struktur 1. Der Schritt S2 entspricht der Ermittlung der Absolutbewegung der mechanischen Struktur 1 im Raum.

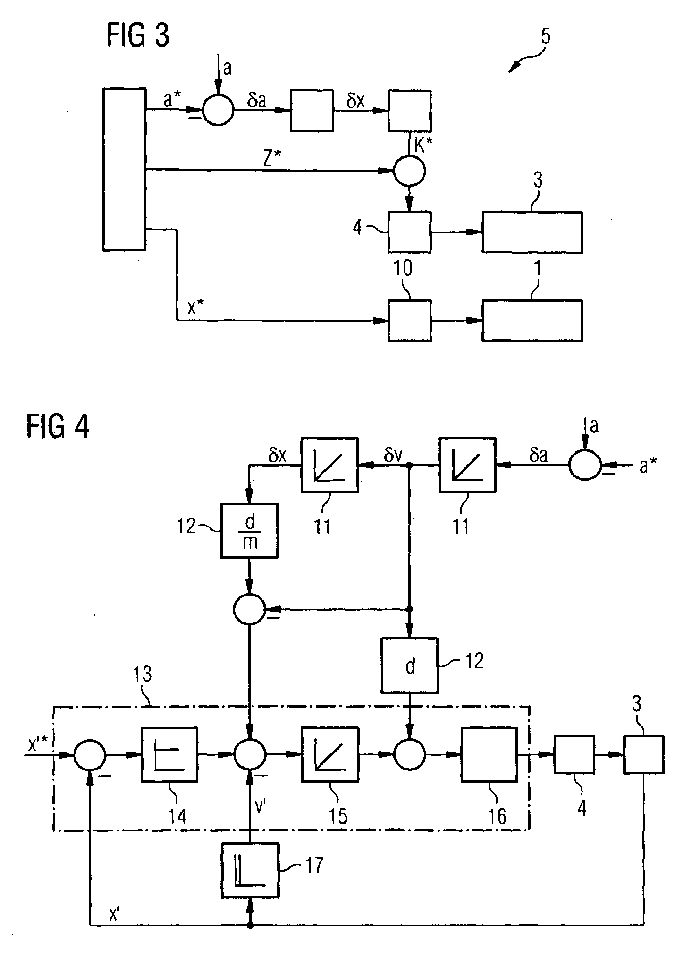

Es ist - siehe FIG 3 - möglich, dass die schwingungsfähige mechanische Struktur 1 mittels eines Strukturantriebs 10 entsprechend einer Sollverfahrbewegung verfahren wird. In diesem Fall wird die Sollverfahrbewegung von der Steuereinrichtung 5 bei der Ermittlung einer Kompensationsbewegung K* berücksichtigt. Am einfachsten geschieht dies gemäß FIG 3 dadurch, dass eine mit der Sollverfahrbewegung korrespondierende Sollbeschleunigung a* der schwingungsfähigen mechanischen Struktur 1 von der ermittelten Istbeschleunigung a der schwingungsfähigen mechanischen Struktur 1 subtrahiert wird und die Kompensationsbewegung K* anhand einer auf diese Weise ermittelten resultierenden Beschleunigung δa ermittelt wird.

Nachfolgend wird ausschließlich der Fall erläutert, dass die schwingungsfähige mechanische Struktur 1 entsprechend einer Sollverfahrbewegung verfahren wird, also anhand der Differenz von Istbeschleunigung a und Sollbeschleunigung a* der schwingungsfähigen mechanischen Struktur 1 die resultierende Beschleunigung δa zur Ermittlung der Kompensationsbewegung K* herangezogen wird. Falls die schwingungsfähige mechanische Struktur 1 nicht verfahren wird, stellt dies lediglich den Fall dar, dass die Sollbeschleunigung a* identisch 0 ist, die resultierende Beschleunigung δa also mit der Istbeschleunigung a identisch ist.

Gemäß FIG 2 ermittelt die Steuereinrichtung in einem Schritt S3 unter Berücksichtigung der ermittelten Absolutbewegung - also anhand der resultierenden Beschleunigung δa - die Kompensationsbewegung K* für die Ausgleichsmasse 3. Die Ermittlung wird von der Steuereinrichtung 5 derart vorgenommen, dass die Kompensationsbewegung K* die Schwingung der mechanischen Struktur 1 dämpft. Die entsprechenden Ermittlungsverfahren sind Fachleuten bekannt und geläufig. Insbesondere kann die Ermittlung so erfolgen, wie dies nachfolgend in Verbindung mit FIG 4 erläutert wird.

Gemäß dem Beispiel von FIG 4 wird durch zweifache Integration in Integratoren 11 anhand der resultierenden Beschleunigung δa zunächst eine resultierende Geschwindigkeit δv und sodann eine resultierende Istlage δx der mechanischen Struktur 1 ermittelt.

Die resultierende Geschwindigkeit δv und die resultierende Lage δx können in Skalierungsgliedern 12 mit geeigneten Skalierungsfaktoren skaliert werden. d steht in den Skalierungsgliedern 12 für eine gewünschte Dämpfung, m für die Masse (in kg) der Ausgleichsmasse 3.

Die entsprechend skalierten Größen können gemäß FIG 4 auf eine Reglerstruktur 13 aufgeschaltet werden, welche die Lage x' und die Geschwindigkeit v' der Ausgleichsmasse 3 relativ zur mechanischen Struktur 1 regelt. Die Reglerstruktur 13 weist intern einen Lageregler 14, einen Geschwindigkeitsregler 15 und eventuell einen Stromregler 16 auf. Die Reglerstruktur 13 wirkt auf den Ausgleichsantrieb 4. Als Istgrößen x', v' werden der Reglerstruktur 13 die Lage x' der Ausgleichsmasse 3 relativ zur mechanischen Struktur 1 und die entsprechende Geschwindigkeit v' zugeführt. Die Geschwindigkeit v' kann beispielsweise in einem Differenzierglied 17 durch Differenzieren der Lage x' ermittelt werden. Als Sollgröße x'* wird der Reglerstruktur 13 eine Solllage x'* zugeführt. Die Solllage x'* kann konstant oder zeitveränderlich sein.

Es ist möglich, die resultierende Beschleunigung δa oder aus der resultierenden Beschleunigung δa abgeleitete Größe einer Frequenzfilterung zu unterziehen. Eine derartige Frequenzfilterung ist Fachleuten allgemein bekannt. Sie ist in FIG 4 nicht mit dargestellt.

Gemäß FIG 2 steuert die Steuereinrichtung 5 in einem Schritt S4 den Ausgleichsantrieb 4 entsprechend der ermittelten Kompensationsbewegung K* an. Die Ausgleichsmasse 3 wird dadurch mittels des Ausgleichsantriebs 4 relativ zur mechanischen Struktur 1 entsprechend der Kompensationsbewegung K* verfahren. Die Ausgleichsmasse 3 stützt sich jedoch, soweit es die durch die Kompensationsbewegung K* definierte Verfahrrichtung betrifft, nicht an der mechanischen Struktur 1 ab. Dies kann dadurch realisiert werden, dass die Ausgleichsmasse 3 sozusagen huckepack auf dem Ausgleichsantrieb 4 mitfährt. Alternativ kann die Ausgleichsmasse 3 relativ zur mechanischen Struktur 1 zwar orthogonal zur Verfahrrichtung geführt sein, beispielsweise über Führungsschienen. Auch in diesem Fall erfolgt jedoch keine direkte Kraftübertragung von der Ausgleichsmasse 3 zur mechanischen Struktur 1, d. h. unter Umgehung des Ausgleichsantriebs 4.

Es ist möglich, dass die Steuereinrichtung 5 den Ausgleichsantrieb 4 ausschließlich entsprechend der Kompensationsbewegung K* ansteuert. Alternativ ist es - siehe FIG 1 - möglich, dass die Ausgleichsmasse 3 von der Steuereinrichtung 5 durch entsprechendes Ansteuern des Ausgleichsantriebs 4 zusätzlich mit einer Überlagerungsbewegung Z* relativ zur mechanischen Struktur 1 verfahren wird. Beispielsweise kann zu diesem Zweck der Lagesollwert x'* - siehe FIG 4 - entsprechend moduliert werden. Die Überlagerungsbewegung Z* ist vorzugsweise derart bestimmt, dass - bezogen auf die Überlagerungsbewegung Z* - zu jedem Zeitpunkt mindestens eine der folgenden Größen von 0 verschieden ist:
- Die erste zeitliche Ableitung, d.h. der durch die Überlagerungsbewegung Z* bewirkte Geschwindigkeitsanteil der Bewegung der Ausgleichsmasse 3 relativ zur mechanischen Struktur 1,
- die zweite zeitliche Ableitung, d.h. der durch die Überlagerungsbewegung Z* bewirkte Beschleunigungsanteil der Bewegung der Ausgleichsmasse 3 relativ zur mechanischen Struktur 1, und
- die dritte zeitliche Ableitung, d.h. der durch die Überlagerungsbewegung Z* bewirkte Ruckanteil der Bewegung der Ausgleichsmasse 3 relativ zur mechanischen Struktur 1.

In aller Regel ist die Überlagerungsbewegung Z* eine oszillierende Bewegung. Ihre Frequenz muss außerhalb des Resonanzspektrums der mechanischen Struktur 1 liegen, beispielsweise hinreichend niederfrequent sein.

Mittels der vorliegenden Erfindung ist es somit möglich, eine Schwingung der schwingungsfähigen mechanischen Struktur 1 auch dann wirksam zu dämpfen, wenn der Steuereinrichtung 5 ein Beschleunigungssignal nicht direkt zur Verfügung gestellt werden kann.

Obwohl die Erfindung im Detail durch das bevorzugte Ausführungsbeispiel näher illustriert und beschrieben wurde, so ist die Erfindung nicht durch die offenbarten Beispiele eingeschränkt. Andere Variationen können vom Fachmann hieraus abgeleitet werden, ohne den Schutzumfang der Erfindung zu verlassen.

## Patentansprüche

1. Betriebsverfahren für einen aktiven Schwingungsdämpfer (2), der eine relativ zu einer schwingungsfähigen mechanischen Struktur (1) bewegbare Ausgleichsmasse (3) aufweist,
- wobei von einer Steuereinrichtung (5) des aktiven Schwingungsdämpfers (2) anhand von der Steuereinrichtung (5) zugeführten Messgrößen (M, I, v') eine Absolutbewegung der mechanischen Struktur (1) im Raum ermittelt wird,
- wobei von der Steuereinrichtung (5) unter Berücksichtigung der ermittelten Absolutbewegung eine eine Schwingung der mechanischen Struktur (1) dämpfende Kompensationsbewegung (K*) für die Ausgleichsmasse (3) ermittelt wird,
- wobei ein auf der mechanischen Struktur (1) angeordneter, auf die Ausgleichsmasse (3) wirkender Ausgleichsantrieb (4) von der Steuereinrichtung (5) entsprechend der ermittelten Kompensationsbewegung (K*) angesteuert wird, so dass die Ausgleichsmasse (3) mittels des Ausgleichsantriebs (4) relativ zur mechanischen Struktur (1) entsprechend der Kompensationsbewegung (K*) verfahren wird,
- wobei die der Steuereinrichtung (5) zugeführten Messgrößen (M, I, v') Istgrößen (M, I) des Ausgleichsantriebs (4) und/oder eine Lage (x') der Ausgleichsmasse (3) relativ zur mechanischen Struktur (1) und/oder mindestens eine zeitliche Ableitung (v') der Lage (x') der Ausgleichsmasse (3) relativ zur mechanischen Struktur (1) umfassen und die Absolutbewegung der mechanischen Struktur (1) im Raum von der Steuereinrichtung (5) anhand der genannten Größen (M, I, v') ermittelt wird.

2. Betriebsverfahren nach Anspruch 1,
**dadurch gekennzeichnet, dass** die Messgrößen (M, I, v') zum einen den Iststrom (I) oder das Istmoment (M) des Ausgleichsantriebs (4) und zum anderen die erste zeitliche Ableitung (v') der Lage (x') der Ausgleichsmasse (3) relativ zur mechanischen Struktur (1) umfassen.

3. Betriebsverfahren nach Anspruch 1 oder 2,
**dadurch gekennzeichnet, dass** die Messgrößen (M, I, v') ausschließlich die in Anspruch 1 oder 2 genannten Größen umfassen.

4. Betriebsverfahren nach Anspruch 1, 2 oder 3,
**dadurch gekennzeichnet, dass** die Ausgleichsmasse (3) von der Steuereinrichtung (5) durch entsprechendes Ansteuern des Ausgleichsantriebs (4) zusätzlich zur Kompensationsbewegung (K*) mit einer Überlagerungsbewegung (Z*) relativ zur mechanischen Struktur (1) verfahren wird und dass zu jedem Zeitpunkt die erste, die zweite und/oder die dritte zeitliche Ableitung der Überlagerungsbewegung (Z*) von Null verschieden sind.

5. Betriebsverfahren nach einem der obigen Ansprüche,
**dadurch gekennzeichnet, dass** die mechanische Struktur (1) mittels eines Strukturantriebs (10) entsprechend einer Sollverfahrbewegung verfahren wird und dass die Sollverfahrbewegung von der Steuereinrichtung (5) bei der Ermittlung der Kompensationsbewegung (K*) berücksichtigt wird.

6. Steuerprogramm, das Maschinencode (9) umfasst, der von einer Steuereinrichtung (5) für einen aktiven Schwingungsdämpfer (2) unmittelbar abarbeitbar ist, wobei die Abarbeitung des Maschinencodes (9) durch die Steuereinrichtung (5) bewirkt, dass die Steuereinrichtung (5) den aktiven Schwingungsdämpfer (2) gemäß einem Betriebsverfahren mit allen Schritten eines Betriebsverfahrens nach einem der obigen Ansprüche betreibt.

7. Steuereinrichtung für einen aktiven Schwingungsdämpfer (2), wobei die Steuereinrichtung derart ausgebildet oder programmiert ist, dass sie den aktiven Schwingungsdämpfer (2) gemäß einem Betriebsverfahren mit allen Schritten eines Betriebsverfahrens nach einem der Ansprüche 1 bis 5 betreibt.

8. Aktiver Schwingungsdämpfer,
- wobei der aktive Schwingungsdämpfer eine Ausgleichsmasse (3) aufweist, die relativ zu einer schwingungsfähigen mechanischen Struktur (1) bewegbar ist,
- wobei der aktive Schwingungsdämpfer einen auf der mechanischen Struktur (1) angeordneten, auf die Ausgleichsmasse (3) wirkenden Ausgleichsantrieb (4) aufweist, mittels dessen die Ausgleichsmasse (3) relativ zur mechanischen Struktur (1) verfahrbar ist,
- wobei der aktive Schwingungsdämpfer Sensoren (6) aufweist, mittels derer Istgrößen (M, I) des Ausgleichsantriebs (4) und/oder eine Lage (x') der Ausgleichsmasse (3) relativ zur mechanischen Struktur (1) und/oder mindestens eine zeitliche Ableitung (v') der Lage (x') der Ausgleichsmasse (3) relativ zur mechanischen Struktur (1) erfassbar sind, und
- wobei der aktive Schwingungsdämpfer eine Steuereinrichtung (5) aufweist, die gemäß Anspruch 7 ausgebildet oder programmiert ist und mit den Sensoren (6) zur Entgegennahme der von den Sensoren (6) erfassten Größen (M, I, v') datentechnisch verbunden ist.

## Claims

1. Operating method for an active oscillation damper (2) which has a balancing mass (3) which is mobile relative to an oscillating mechanical structure (1),
- wherein an absolute motion of the mechanical structure (1) is three-dimensionally determined by a control device (5) of the active oscillation damper (2) using measured values (M, I, v') supplied by the control device (5),
- wherein, by taking into account the determined absolute motion, a compensation movement (K*) for the balancing mass (3) damping an oscillation of the mechanical structure (1) is determined by the control device (5),
- wherein a balancing drive (4), arranged on the mechanical structure (1) and acting on the balancing mass (3), is activated by the control device (5) according to the determined compensation movement (K*), so that the balancing mass (3) is displaced by means of the balancing drive (4) relative to the mechanical structure (1) according to the compensation movement (K*),
- wherein the measured values (M, I, v') supplied to the control device (5) include actual values (M, I) of the balancing drive (4) and/or a position (x') of the balancing mass (3) relative to the mechanical structure (1) and/or at least one temporal derivation (v') of the position (x') of the balancing mass (3) relative to the mechanical structure (1) and the absolute motion of the mechanical structure (1) is three-dimensionally determined by the control device (5) using the aforementioned values (M, I, v').

2. Operating method according to claim 1, **characterised in that** the measured values (M, I, v') firstly include the actual current (I) or the actual moment (M) of the balancing drive (4) and secondly the first temporal derivation (v') of the position (x') of the balancing mass (3) relative to the mechanical structure (1).

3. Operating method according to claim 1 or 2, **characterised in that** the measured values (M, I, v') exclusively include the values cited in claim 1 or 2.

4. Operating method according to claim 1, 2 or 3, **characterised in that** the balancing mass (3) is displaced by the control device (5), by corresponding activation of the balancing drive (4) in addition to the compensation movement (K*), by a superimposed movement (Z*) relative to the mechanical structure (1) and at any time the first, the second and/or the third temporal derivation of the superimposed movement (Z*) are different from zero.

5. Operating method according to one of the above claims, **characterised in that** the mechanical structure (1) is displaced by means of a structural drive (10) according to a reference displacement movement and the reference displacement movement is taken into account by the control device (5) when determining the compensation movement (K*).

6. Control program, which comprises a machine code (9), which may be directly processed by a control device (5) for an active oscillation damper (2), wherein the processing of the machine code (9) by the control device (5) results in the control device (5) operating the active oscillation damper (2) according to an operating method comprising all the steps of an operating method according to one of the preceding claims.

7. Control device for an active oscillation damper (2), wherein the control device is configured or programmed such that it operates the active oscillation damper (2) according to an operating method comprising all the steps of an operating method according to one of claims 1 to 5.

8. Active oscillation damper,
- wherein the active oscillation damper has a balancing mass (3) which is mobile relative to an oscillating mechanical structure (1),
- wherein the active oscillation damper has a balancing drive (4) arranged on the mechanical structure (1), acting on the balancing mass (3), by means of which the balancing mass (3) is able to be displaced relative to the mechanical structure (1),
- wherein the active oscillation damper has sensors (6), by means of which actual values (M, I) of the balancing drive (4) and/or a position (x') of the balancing mass (3) relative to the mechanical structure (1) and/or at least one temporal derivation (v') of the position (x') of the balancing mass (3) relative to the mechanical structure (1) may be detected, and
- wherein the active oscillation damper has a control device (5) which is configured or programmed according to claim 7 and connected by data systems to the sensors (6) for receiving values (M, U, v') detected by the sensors (6).

## Revendications

1. Procédé pour faire fonctionner un amortisseur (2) d'oscillation actif, qui a une masselotte (3) de compensation mobile par rapport à une structure (1) mécanique susceptible d'osciller,
- dans lequel on détermine par un dispositif (5) de commande de l'amortisseur (2) d'oscillation actif, au moyen de grandeurs (M, I, v') de mesure envoyées par le dispositif (5) de commande, un déplacement absolu de la structure (1) mécanique dans l'espace,
- dans lequel on détermine par le dispositif (5) de commande, en tenant compte du déplacement absolu déterminé, un déplacement (K*) de compensation de la masselotte (3) de compensation amortissant une oscillation de la structure (1) mécanique,
- dans lequel on commande, conformément au déplacement (K*) de compensation déterminé par le dispositif (5) de commande, un entraînement (4) de compensation monté sur la structure (1) mécanique et agissant sur la masselotte (3) de compensation, de manière à déplacer, conformément au déplacement (K*) de compensation, la masselotte (3) de compensation au moyen de l'entraînement (4) de compensation par rapport à la structure (1) mécanique,
- dans lequel les grandeurs (M, I, v') de mesure envoyées au dispositif (5) de commande comprennent des grandeurs (M, I) réelles de l'entraînement (4) de compensation et/ou une position (x') de la masselotte (3) de compensation par rapport à la structure (1) mécanique et/ou au moins une dérivé (v') dans le temps de la position (x') de la masselotte (3) de compensation par rapport à la structure (1) mécanique et on détermine le déplacement absolu de la structure (1) mécanique dans l'espace par le dispositif (5) de commande au moyen des grandeurs (M, I, v') mentionnées.

2. Procédé suivant la revendication 1,
**caractérisé en ce que**
les grandeurs (M, I, v') de mesure comprennent, d'une part, le courant (I) réel ou le couple (M) réel de l'entraînement (4) de compensation et, d'autre part, la dérivé (v') première en fonction du temps de la position (x') de la masselotte (3) de compensation par rapport à la structure (1) mécanique.

3. Procédé suivant la revendication 1 ou 2,
**caractérisé en ce que**
les grandeurs (M, I, v') de mesure comprennent exclusivement les grandeurs mentionnées dans la revendication 1 ou 2.

4. Procédé suivant la revendication 1, 2 ou 3,
**caractérisé en ce que**
l'on déplace supplémentairement au déplacement (K*) de compensation par un déplacement (Z*) de superposition par rapport à la structure (1) mécanique la masselotte (3) de compensation par le dispositif (5) de commande par des commandes adéquates de l'entraînement (4) de compensation et **en ce qu'**à chaque instant la dérivé première, deuxième et/ou troisième en fonction du temps du déplacement (Z*) de superposition sont différentes de zéro.

5. Procédé suivant l'une des revendications précédentes,
**caractérisé en ce que**
l'on déplace, conformément à un déplacement de consigne, la structure (1) mécanique au moyen d'un entraînement (10) de structure et **en ce que** le déplacement de consigne est pris en compte par le dispositif (5) de commande lors de la détermination du déplacement (K*) de compensation.

6. Programme de commande, qui comprend un code (9) machine, qui peut être élaboré directement par un dispositif (5) de commande d'un amortisseur (2) d'oscillation actif, l'élaboration du code (9) machine par le dispositif (5) de commande faisant que le dispositif (5) de commande fait fonctionner l'amortisseur (2) d'oscillation actif suivant un procédé de fonctionnement ayant tous les stades d'un procédé de fonctionnement suivant l'une des revendications précédentes.

7. Dispositif de commande d'un amortisseur (2) d'oscillation actif, le dispositif de commande étant constitué ou programmé, de manière à faire fonctionner l'amortisseur (2) d'oscillation actif suivant un procédé de fonctionnement ayant toutes les caractéristiques d'un procédé de fonctionnement suivant l'une des revendications 1 à 5.

8. Amortisseur d'oscillation actif,
- dans lequel l'amortisseur d'oscillation actif a une masselotte (3) de compensation, qui est mobile par rapport à une structure (1) mécanique susceptible d'osciller,
- dans lequel l'amortisseur d'oscillation actif a un entraînement (4) de compensation, qui est monté sur la structure (1) mécanique, qui agit sur la masselotte (3) de compensation et au moyen duquel la masselotte (3) de compensation peut être déplacée par rapport à la structure (1) mécanique,
- dans lequel l'amortisseur d'oscillation actif a des capteurs (6), au moyen desquels des grandeurs (M, I) réelles de l'entraînement (4) de compensation et/ou une position (x') de la masselotte (3) de compensation par rapport à la structure (1) mécanique et/ou au moins une dérivé (v') en fonction du temps de la position (x') de la masselotte (3) de compensation par rapport à la structure (1) mécanique peuvent être détectées, et
- dans lequel l'amortisseur d'oscillation actif a un dispositif (5) de commande, qui est constitué ou programmé suivant la revendication 7 et qui est relié en technique informatique aux capteurs (6) pour la réception des grandeurs (M, I, v') détectées par les capteurs (6).
